# EUROPÄISCHE PATENTANMELDUNG

(11) **EP 3 832 562 A1**
(43) Veröffentlichungstag der Anmeldung: **09.06.2021**
(21) Anmeldenummer: 19212762.9
(22) Anmeldetag: 02.12.2019
(51) Int. Cl.: G06Q 10/06

(54) **ERSTELLEN UND AKTUALISIEREN VON ABLAUFPLÄNEN**

(71) Anmelder: Bayer AG, 51373 Leverkusen (DE)
(72) Erfinder: Die Erfindernennung liegt noch nicht vor
(74) Vertreter: BIP Patents

(57) **Zusammenfassung**

Die vorliegende Erfindung befasst sich mit der Erstellung und Aktualisierung von Ablaufplänen für die Durchführung einer Mehrzahl an Aufgaben unter Verwendung begrenzter Ressourcen. Gegenstände der vorliegenden Erfindung sind ein Computersystems, ein Computerprogrammprodukt und ein Verfahren zur Erstellung und Aktualisierung von Ablaufplänen, insbesondere zur Durchführung von Qualitätskontrollen. Ein weiterer Gegenstand der vorliegenden Erfindung ist die Verwendung des erfindungsgemäßen Computersystems zum Erstellen und/oder Ändern eines Ablaufplans für die Durchführung von Qualitätskontrollen, insbesondere im Rahmen der Herstellung von Arzneimitteln, Pflanzenschutzmitteln und/oder Wirkstoffen.

## Beschreibung

Die vorliegende Erfindung befasst sich mit der Erstellung und Aktualisierung von Ablaufplänen für die Durchführung einer Mehrzahl an Aufgaben unter Verwendung begrenzter Ressourcen. Gegenstände der vorliegenden Erfindung sind ein Computersystems, ein Computerprogrammprodukt und ein Verfahren zur Erstellung und Aktualisierung von Ablaufplänen, insbesondere zur Durchführung von Qualitätskontrollen. Ein weiterer Gegenstand der vorliegenden Erfindung ist die Verwendung des erfindungsgemäßen Computersystems zum Erstellen und/oder Ändern eines Ablaufplans für die Durchführung von Qualitätskontrollen, insbesondere im Rahmen der Herstellung von Arzneimitteln, Pflanzenschutzmitteln und/oder Wirkstoffen.

Es gibt eine Vielzahl an Bereichen und Gegebenheiten, in/bei denen Ablaufpläne erstellt und aktualisiert werden müssen. Als ein Beispiel sei die Qualitätskontrolle bei der Herstellung und/oder Freigabe von Produkten angeführt.

Die Qualitätskontrolle zielt darauf ab, dass ein Produkt vordefinierte Qualitätskriterien erfüllt. Bei der Qualitätskontrolle werden mess-, zähl- und/oder klassifizierbare Ist-Merkmale eines Gutes ermittelt und geprüft, inwieweit diese mit den vordefinierten Qualitätskriterien (Soll-Merkmale) übereinstimmen. Dabei beschränken sich diese Untersuchungen üblicherweise nicht nur auf das Produkt selbst sondern können auch Rohmaterialien, Zwischenprodukte, Hilfsmittel (wie beispielsweise Reinigungsmittel), Verpackungen und dergleichen umfassen, die bei der Herstellung von Produkten eingesetzt werden.

Qualitätskontrollen spielen insbesondere bei der Herstellung von Arzneistoffen eine zentrale Rolle, da hier Qualitätsabweichungen direkte Auswirkungen auf die Gesundheit der Verbraucher haben können. Unter der Bezeichnung *Gute Arbeitspraxis* (engl.: *Good Practice,* kurz: GxP) wurden daher Richtlinien zur Qualitätssicherung geschaffen, welche insbesondere in der Medizin, der Pharmazie und der pharmazeutischen Chemie Bedeutung haben.

Bei einer Qualitätskontrolle werden oftmals stets wiederkehrende Untersuchungen an Stichproben vorgenommen, um die Qualität zu überwachen und einen definierten Qualitätsstandard einzuhalten. Dabei ist es denkbar, dass Untersuchungen nur von entsprechend geschulten Mitarbeitern an bestimmten Maschinen vorgenommen werden können. Die Ressourcen, die zur Qualitätskontrolle eingesetzt werden, sind üblicherweise beschränkt, d.h. dass nicht alle Untersuchungen zum selben Zeitpunkt vorgenommen werden können. Beschränkte Ressourcen machen einen Ablaufplan erforderlich. In einem Ablaufplan ist festgelegt, welche Aktion an welchem Gegenstand zu welchem Zeitpunkt von welcher Person und ggf. unter Verwendung von welchen Hilfsmitteln durchgeführt werden soll. Dabei sollte ein solcher Ablaufplan im Hinblick auf ein Ziel optimiert sein, z.B. in Hinblick auf eine rasche Durchführung aller erforderlichen Ressourcen.

In der Realität kommt es immer wieder zu Störungen bei Abläufen, die eine Änderung (Aktualisierung) eines Ablaufplanes verlangen. Die Änderung eines Ablaufplans sollte einfach und schnell sein, um unnötige Stillstandzeiten zu vermeiden.

Diesen Problemen widmet sich die vorliegende Erfindung. Die Gegenstände der vorliegenden unabhängigen Patentansprüche ermöglichen eine effiziente Erstellung und Aktualisierung von Ablaufplänen. Bevorzugte Ausführungsformen finden sich in den abhängigen Patentansprüchen sowie in der vorliegenden Beschreibung und in den Zeichnungen.

Ein erster Gegenstand der vorliegenden Erfindung ist ein Computersystem umfassend:
- eine Datenbank oder mehrere Datenbanken, in der / in denen Ressourcen-Informationen gespeichert sind, wobei die Ressourcen-Informationen
   - Mitarbeiterinformationen über eine Mehrzahl an Mitarbeitern,
   - Prozessinformationen über eine Mehrzahl an Prozessen,
   - Betriebsmittelinformationen über eine Mehrzahl an Betriebsmitteln
   - und optional Hilfsmittelinformationen über eine Mehrzahl an Hilfsmitteln
   umfassen,
- eine Empfangseinheit zum Empfang von Aufgabeninformationen, wobei die Aufgabeninformationen zumindest eine Mehrzahl von Prozessgegenständen spezifizieren, die jeweils einem oder mehreren Prozessen zugeführt werden sollen,
- eine Planungseinheit, zur Erstellung eines Ablaufplans anhand der Ressourcen-Informationen und der Aufgabeninformationen, wobei der Ablaufplan Angaben darüber umfasst,
   - in welchen Zeitspannen die Prozesse ausgeführt werden sollen,
   - von welchen Mitarbeitern die Prozesse ausgeführt werden sollen,
   - welche Betriebsmittel bei der Ausführung der Prozesse eingesetzt werden sollen, und
   - optional welche Hilfsmittel bei der Ausführung der Prozesse eingesetzt werden sollen,
   wobei der Ablaufplan im Hinblick auf ein Optimierungsziel optimiert ist,
- eine Ausgabeeinheit zum Ausgeben des Ablaufplan oder eines Teil davon.

Ein weiterer Gegenstand der vorliegenden Erfindung ist ein Computerprogrammprodukt umfassend einen Datenträger, auf dem ein Computerprogramm gespeichert ist, das in den Arbeitsspeicher eines Computersystems geladen werden kann und dort das Computersystem dazu veranlasst, folgende Schritte auszuführen:
- Empfangen von Aufgabeninformationen, wobei die Aufgabeninformationen zumindest eine Mehrzahl von Prozessgegenständen spezifizieren, die jeweils einem oder mehreren Prozessen zugeführt werden sollen,
- Empfangen oder Ermitteln von Prozessinformationen, wobei die Prozessinformationen die Prozesse spezifizieren, denen die Prozessgegenstände zugeführt werden sollen,
- Ermitteln von Betriebsmittelinformationen für eine Mehrzahl an Betriebsmitteln,
- Ermitteln von Mitarbeiterinformationen für eine Mehrzahl an Mitarbeitern,
- Erstellen eines Ablaufplans anhand der Aufgabeninformationen, der Prozessinformationen, der Betriebsmittelinformationen und der Mitarbeiterinformationen, wobei der Ablaufplan Angaben darüber umfasst,
   - in welchen Zeitspannen die Prozesse ausgeführt werden sollen,
   - von welchen Mitarbeitern die Prozesse ausgeführt werden sollen, und
   - welche Betriebsmittel bei der Ausführung der Prozesse eingesetzt werden sollen,
   wobei der Ablaufplan im Hinblick auf ein Optimierungsziel optimiert ist,
- Anzeigen und/oder Ausgeben und/oder Speichern zumindest eines Teils des Ablaufplans.

Ein weiterer Gegenstand der vorliegenden Erfindung ist ein Verfahren umfassend die Schritte:
- Empfangen von Aufgabeninformationen, wobei die Aufgabeninformationen zumindest eine Mehrzahl von Prozessgegenständen spezifizieren, die jeweils einem oder mehreren Prozessen zugeführt werden sollen,
- Empfangen oder Ermitteln von Prozessinformationen, wobei die Prozessinformationen die Prozesse spezifizieren, denen die Prozessgegenstände zugeführt werden sollen,
- Ermitteln von Betriebsmittelinformationen für eine Mehrzahl an Betriebsmitteln,
- Ermitteln von Mitarbeiterinformationen für eine Mehrzahl an Mitarbeitern,
- Erstellen eines Ablaufplans anhand der Aufgabeninformationen, der Prozessinformationen, der Betriebsmittelinformationen und der Mitarbeiterinformationen, wobei der Ablaufplan Angaben darüber umfasst,
   - in welchen Zeitspannen die Prozesse ausgeführt werden sollen,
   - von welchen Mitarbeitern die Prozesse ausgeführt werden sollen, und
   - welche Betriebsmittel bei der Ausführung der Prozesse eingesetzt werden sollen,
   wobei der Ablaufplan im Hinblick auf ein Optimierungsziel optimiert ist,
- Anzeigen und/oder Ausgeben und/oder Speichern zumindest eines Teils des Ablaufplans.

Ein weiterer Gegenstand der vorliegenden Erfindung ist die Verwendung des erfindungsgemäßen Computersystems zum Erstellen und/oder Ändern eines Ablaufplans für die Durchführung von Qualitätskontrollen, insbesondere im Rahmen der Herstellung von Arzneimitteln, Pflanzenschutzmitteln und/oder Wirkstoffen.

Die Erfindung wird nachstehend näher erläutert, ohne zwischen den Erfindungsgegenständen (Computersystem, Computerprogrammprodukt, Verfahren, Verwendung) zu unterscheiden. Die nachfolgenden Erläuterungen sollen vielmehr für alle Erfindungsgegenstände in analoger Weise gelten, unabhängig davon, in welchem Kontext (Computersystem, Computerprogrammprodukt, Verfahren, Verwendung) sie erfolgen.

Wenn in der vorliegenden Beschreibung oder in den Patentansprüchen Schritte in einer Reihenfolge genannt werden, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden können; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Die vorliegende Erfindung dient der Erstellung und Aktualisierung eines Ablaufplans. Ein Ablaufplan ist eine Ansammlung von Informationen. Diese Informationen betreffen Prozessgegenstände, Prozesse, Betriebsmittel, ggf. Hilfsmittel, Mitarbeiter und Zeiten (Zeitpunkte und/oder Zeitspannen). Einem Ablaufplan kann entnommen werden, welche Prozesse an welchen Gegenständen mit welchen Betriebsmitteln von welchen Mitarbeitern ggf. unter Zuhilfenahme welcher Hilfsmittel zu welchen Zeiten durchgeführt werden sollen.

Prozessgegenstände im Sinne der vorliegenden Erfindung sind (körperliche) Objekte, die einem oder mehreren Prozessen zugeführt werden. Beispiele für Prozessgegenstände sind Rohmaterialien, Zwischenprodukte und/oder Produkte. Vorzugsweise handelt es sich bei den Prozessgegenständen um Stichproben von Rohmaterialien, von Zwischenprodukten und/oder von Produkten. Besonders bevorzugt handelt es sich um Stichproben von Rohmaterialien, von Zwischenprodukten und/oder von Produkten, die bei der Herstellung von Arzneimitteln oder Wirkstoffen verwendet werden und/oder anfallen und/oder erstehen und/oder erzeugt werden.

Ein Prozess im Sinne der vorliegenden Erfindung ist eine Aktion oder eine Mehrzahl an Aktionen, die mit oder an einem Prozessgegenstand durchgeführt wird/werden. Der Prozessgegenstand kann dabei reversibel oder irreversibel verändert werden oder unverändert bleiben. Vorzugsweise handelt es sich bei einem Prozess um die Ermittlung eines Ist-Merkmals des Prozessgegenstands oder an dem Prozessgegenstand oder eine vorbereitende Maßnahme für eine solche Ermittlung oder eine Folgemaßnahme von einer solchen Ermittlung. Vorzugsweise ist der Prozess zumindest ein Teil einer Untersuchung im Rahmen einer Qualitätskontrolle, insbesondere im Rahmen der Herstellung eines Arzneimittels, Pflanzenschutzmittels und/oder Wirkstoffs.

Ein Mitarbeiter ist diejenige natürliche Person, die einen Prozess initiiert, vorbereitet, ausführt, nachbereitet, auswertet und/oder betreut. Es ist denkbar, dass mehrere Mitarbeiter in einen Prozess involviert sind.

Ein Betriebsmittel im Sinne der vorliegenden Erfindung ist ein Mittel, das zur Durchführung eines Prozesses eingesetzt wird. Vorzugsweise wird es bei der Durchführung des Prozesses nicht verbraucht und/oder irreversibel verändert, so dass es nach einem durchlaufenen Prozess erneut in einem weiteren Prozess eingesetzt werden kann. Vorzugsweise handelt es sich um eine Vorrichtung, besonders bevorzugt um eine Vorrichtung zur Vorbereitung und/oder Durchführung einer Ermittlung eines Ist-Zustands des Prozessgegenstands wie beispielweise eine Waage, ein Trocknungsinstrument (z.B. Ofen, Vakuumtrockner oder dergleichen), ein Heizinstrument, ein Kühlinstrument oder eine Messapparatur zur Bestimmung einer physikalischen oder chemischen Eigenschaft (z.B. Spektrometer, Chromatograph, Rheometer oder dergleichen). Es kann sich bei einem Betriebsmittel aber auch um eine Maschine zur Prozessierung von Rohmaterialien, Zwischenprodukten, Produkten und /oder Hilfsstoffen handeln. Auch ein Arbeitsplatz, ein Computer, ein Drucker, ein Flachbettscanner und/oder dergleichen kann ein Betriebsmittel im Sinne der vorliegenden Erfindung sein.

Es ist denkbar, dass für die Ausführung eines Prozesses Hilfsmittel eingesetzt werden. Bei einem Hilfsmittel handelt es sich (neben einem oder mehreren Betriebsmitteln) um ein weiteres Mittel, das bei der Ausführung eines Prozesses eingesetzt wird. Vorzugsweise handelt es sich bei einem Hilfsmittel um einen Stoff oder ein Stoffgemisch oder einen sonstigen körperlichen Gegenstand, der/das kein Bestandteil eines Zwischen- oder Endprodukts ist, aber zu dessen Erzeugung und/oder Prozessierung eingesetzt wird. Vorzugsweise wird das Hilfsmittel dabei verbraucht oder irreversibel verändert. Beispiele für Hilfsmittel sind Reinigungsmittel, Lösemittel, Filterstoffe, Extraktionsmittel, Druckluft, Inertgas, Ätzmittel und/oder dergleichen.

Betriebsmittel, Hilfsmittel und/oder Mitarbeiter werden in dieser Beschreibung auch als Ressourcen bezeichnet. Ressourcen sind demnach Mittel, die zur Ausführung eines Prozesses eingesetzt. Üblicherweise kann ein Prozess ohne derartige Ressourcen gar nicht ausgeführt werden. Die Ressourcen sind ferner die Mittel, die nur begrenzt verfügbar sind, weswegen nicht alle auszuführenden Prozesse gleichzeitig ausgeführt werden können, um eine bestehende Aufgabe oder mehrere bestehenden Aufgaben zu erledigen. Prozessgegenstände können als Ressourcen behandelt werden, insbesondere dann, wenn ein Prozessgegenstand mehreren Prozessen zugeführt werden soll, der Prozessgegenstand aber nicht geteilt und auf die verschiedenen Prozessen verteilt werden kann. Anders ausgedrückt ist ein Prozessgegenstand dann eine Ressource im Sinne der vorliegenden Erfindung, wenn seine Verfügbarkeit begrenzt ist und sich einschränkend auf die Erledigung einer oder mehrerer Aufgaben auswirken kann.

Die Erstellung eines Ablaufplans erfolgt auf Basis einer Mehrzahl an zu erfüllenden Aufgaben. Eine Aufgabe spezifiziert üblicherweise einen oder mehrere Prozessgegenstände sowie den Prozess oder die Prozesse, die ausgeführt werden sollen. Die Aufgabe kann ferner eine Frist spezifizieren, innerhalb der ein Prozess ausgeführt werden soll. Die Aufgabe kann ferner Betriebsmittel und/oder Hilfsmittel spezifizieren, mit denen der Prozess ausgeführt werden soll. Die Aufgabe kann ferner Befähigungen und/oder Sachkenntnisse spezifizieren, die ein Mitarbeiter aufweisen muss, um den Prozess auszuführen und/oder mit dem Prozessgegenstand umzugehen. In einer bevorzugten Ausführungsform spezifiziert eine Aufgabe lediglich Prozessgegenstände, Prozesse, die mit den Prozessgegenständen ausgeführt werden sollen und optional Fristen, in denen die Prozesse ausgeführt werden sollen.

Eine Aufgabe kann mehrere (Teil-)Aufgaben umfassen und mehrere (Teil-)Aufgaben können zu einer (Gesamt-)aufgabe zusammengefasst werden.

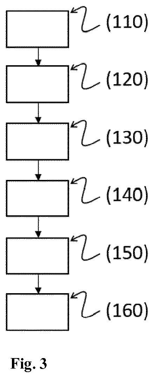

Die Informationen, die eine zu erledigende Aufgabe oder mehrere zu erledigende Aufgaben spezifizieren, sind in Aufgabeninformationen enthalten. Aufgabeninformationen werden in einem ersten Schritt des erfindungsgemäßen Verfahrens von dem erfindungsgemäßen Computersystem empfangen. Der Empfang erfolgt beispielsweise auf elektronischem Weg (z.B. über E-Mail oder dergleichen) z.B. über ein Netzwerk, mit dem das erfindungsgemäße Computersystem verbunden ist. Denkbar ist auch, dass Aufgabeninformationen zusammen mit Prozessgegenständen übermittelt werden. Ein übliches Szenario ist beispielsweise, dass Prozessgegenstände an einem Standort oder in einem Laboratorium eintreffen, und diese Prozessgegenstände Aufgabeninformationen umfassen (siehe hierzu auch die Erläuterungen zur Figur 3).

Die Aufgabeninformationen enthalten zumindest Informationen über die Prozessgegenstände, die einem oder mehreren Prozessen zugeführt werden sollen. Anhand der Aufgabeninformationen lassen sich jedenfalls die Prozessgegenstände eindeutig spezifizieren.

Vorzugsweise umfassen die Aufgabeninformationen eindeutige Kennungen der Prozessgegenstände. Jeder Prozessgegenstand verfügt vorzugsweise über eine eigene eindeutige Kennung. Anhand einer solchen eindeutigen Kennung ist ein Prozessgegenstand eindeutig identifizierbar.

Die eindeutige Kennung kann eine Nummer oder ein alphanumerischer Code oder ein Binärcode oder dergleichen sein. Die eindeutige Kennung kann an dem Prozessgegenstand oder an einer Verpackung oder an einem Behälter, in dem sich der Prozessgegenstand befindet, oder auf einem Dokument, das zusammen mit dem Prozessgegenstand übermittelt worden ist, angebracht sein (z.B. in Form eines Etiketts oder Aufdrucks oder einer Gravur oder dergleichen). Die Erfassung einer solchen eindeutigen Kennung kann beispielsweise durch Eingabe über ein Eingabemittel (z.B. eine Tastatur, ein Touchscreen, ein Mikrofon (per Spracheingabe) oder dergleichen) in das erfindungsgemäße Computersystem erfolgen. Vorzugsweise ist die eindeutige Kennung in Form eines maschinenlesbaren Codes, beispielsweise eines optoelektronisch lesbaren Codes (z.B. ein Strichcode oder ein Matrixcode oder dergleichen) oder in Form eines mittels Funk auslesbaren elektronischen Speichers (z.B. als RFID-Tag) oder dergleichen vorhanden und kann mit einem geeigneten Lesegerät (Strichcodescanner, Kamera, RFID-Lesegerät oder dergleichen) an das erfindungsgemäße Computersystem übertragen werden.

Denkbar ist aber auch, dass eine solche eindeutige Kennung unabhängig von dem Prozessgegenstand zum Beispiel auf elektronischem Weg (als E-Mail oder dergleichen) an das erfindungsgemäße Computersystem übermittelt wird.

Anhand der eindeutigen Kennung können weitere Informationen zu dem jeweiligen Prozessgegenstand z.B. aus einer Datenbank ermittelt werden, wie beispielsweise Art des Prozessgegenstands (z.B. um welche Stichprobe aus welcher Charge es sich handelt), Eigenschaften des Prozessgegenstands (z.B. Gefahrenhinweise oder sonstige Hinweise zum Umgang mit dem Prozessgegenstand), Prozesse, die mit dem Prozessgegenständen ausgeführt werden können und/oder sollen, Prozessparameter für die Durchführung eines Prozesses mit dem Prozessgegenstand und/oder dergleichen.

Analog zu den Prozessgegenständen können auch die Betriebsmittel und/oder Hilfsmittel eindeutige Kennungen aufweisen, anhand derer sie spezifiziert werden können und anhand derer weitere Informationen zu den Betriebsmitteln bzw. Hilfsmitteln aus einer oder mehrere Datenbanken erfasst werden können. Die Aussagen in dieser Beschreibung zu den eindeutigen Kennungen in Bezug auf Prozessgegenstände gelten analog auch für Betriebsmittel und Hilfsmittel.

Es ist denkbar, dass die Aufgabeninformationen auch Prozessinformationen umfassen. Es ist jedoch auch denkbar, dass Prozessinformationen anhand von Informationen zum Prozessgegenstand (z.B. anhand der Kennung eines Prozessgegenstands) aus einer Datenbank ermittelt werden. Prozessinformationen spezifizieren den Prozess, dem ein Prozessgegenstand zugeführt werden soll.

Eine Prozessinformation kann beispielsweise die Prozessdauer sein. Es ist denkbar, dass für einen Prozess mehrere Zeitspannen definiert sind, beispielsweise eine Zeitspanne für die Gesamtdauer des Prozesses, eine oder mehrere Zeitspannen, in der / in denen ein oder mehrere Betriebsmittel verwendet werden (und daher in keinem anderen Prozess verwendet werden können), und/oder eine oder mehrere Zeitspannen, in der / in denen ein oder mehrere Mitarbeiter mit dem Prozess beschäftigt sind (und daher keine anderen Prozess ausführen können).

Ein Prozess kann einen oder mehrere Schritte umfassen. Die Prozessinformationen können Angaben über die einzelnen Schritte umfassen, z.B. welche Schritte auftreten, wie lange sie dauern, welche Betriebsmittel für einen Prozessschritt erforderlich sind und/oder dergleichen.

Eine weitere Prozessinformation kann beispielsweise eine Reihenfolge sein. Es ist denkbar, dass ein Prozess erst dann ausgeführt werden kann, wenn vorher ein anderer Prozess ausgeführt worden ist. Zum Beispiel kann der Prozess der Messung einer physikalisch-chemischen Eigenschaft einen vorgeschalteten Prozess zur Vorbereitung des Prozessgegenstands auf die genannte Messung (zum Beispiel einen Trocknungsvorgang oder einen Wiegevorgang oder dergleichen) erforderlich machen. Ferner kann es sein, dass auf einen Prozess unmittelbar ein anderer Prozess folgen muss, um zu einem gewünschten Ergebnis zu kommen. Die Reihenfolge spezifiziert, ob für einen Prozess ein oder mehrere Vorgängerprozesse und/oder ein oder mehrere Nachfolgeprozesse erforderlich sind, und ggf. an welcher Stelle einer Prozesskette ein Prozess erfolgen soll.

Eine weitere Prozessinformation kann beispielsweise eine Angabe über das Betriebsmittel oder die Betriebsmittel umfassen, die für die Ausführung des Prozesses erforderlich sind. Die Prozessinformation kann ein Betriebsmittel und optional Spezifikationen für das Betriebsmittel spezifizieren. Denkbar ist auch, dass Spezifikationen für ein Betriebsmittel z.B. anhand einer eindeutigen Kennung aus einer oder mehreren Datenbanken ermittelt werden.

Eine weitere Prozessinformation kann beispielsweise eine Angabe über ein oder mehrere Hilfsmittel umfassen, die in einem Prozess eingesetzt werden. Die Prozessinformation kann ein Hilfsmittel und optional eine Menge und/oder eine Konzentration und/oder eine Reinheit und/oder dergleichen für das Hilfsmittel spezifizieren.

Sind alle zur Spezifizierung der Aufgabe(n) erforderlichen Informationen empfangen und/oder ermittelt worden, werden die für die Aufgabe(n) benötigten Ressourcen ermittelt. Ressourcen sind alle zur Erfüllung der Aufgabe(n) erforderlichen Mittel (insbesondere Mitarbeiter, Betriebsmittel und/oder Hilfsmittel). Informationen zu den vorhandenen Ressourcen sind üblicherweise in einer Datenbank oder in mehreren Datenbank gespeichert.

Die Informationen zu den vorhandenen Ressourcen (Ressourcen-Informationen) können in Mitarbeiterinformationen, Betriebsmittelinformationen und ggf. Hilfsmittelinformationen unterteilt sein. Weitere Kategorien und Untergruppen von Ressourcen-Informationen sind denkbar.

Mitarbeiterinformationen umfassen eine Liste der vorhandenen Mitarbeiter. Mitarbeiterinformationen umfassen vorzugsweise auch Beschränkungen in Bezug auf die Mitarbeiter; beispielsweise ist ein Mitarbeiter nicht zu jeder Zeit verfügbar. Daher umfassen die Mitarbeiterinformationen vorzugsweise Mitarbeiterverfügbarkeiten. Vorzugsweise sind für jeden einzelnen Mitarbeiter individuelle Mitarbeiterverfügbarkeiten hinterlegt. Unter Mitarbeiterverfügbarkeiten werden Zeitspannen verstanden, in denen der jeweilige Mitarbeiter für die Durchführung eines oder mehrerer Prozess verfügbar ist. Üblicherweise handelt es sich um die Dienstzeiten abzüglich der Pausen- und Urlaubszeiten sowie anderer geplanter Abwesenheiten (z.B. Dienstreise, Kur, Weiterbildung oder dergleichen). Die Mitarbeiterverfügbarkeiten sind üblicherweise in einer oder in mehreren Datenbanken gespeichert. Falls ein Mitarbeiter ungeplant (zum Beispiel infolge einer Krankheit) für eine Zeitspanne nicht verfügbar ist, kann die Mitarbeiterverfügbarkeit in der Datenbank entsprechend geändert (aktualisiert) werden.

Ferner können die Mitarbeiterinformationen Mitarbeiterprofile umfassen. Vorzugsweise gibt es für jeden einzelnen Mitarbeiter ein individuelles Mitarbeiterprofil. Es ist denkbar, dass zur Durchführung bestimmter Prozesse und/oder zum Einsatz bestimmter Betriebsmittel und/oder zum Umgang mit bestimmten Arten von (Prozess-)Gegenständen eine definierte Schulung erforderlich ist und/oder eine definierte Befähigung vorhanden sein muss und/oder eine Sachkenntnis nachgewiesen sein muss und/oder eine bestimmte körperliche Kondition vorliegen muss. Das Mitarbeiterprofil kann daher insbesondere angeben, welche Prozesse der Mitarbeiter durchführen kann und/oder darf und/oder welche Betriebsmittel der Mitarbeiter einsetzen kann und/oder darf und/oder mit welchen Arten von (Prozess-) Gegenständen der Mitarbeiter umgehen kann und/oder darf.

Die Betriebsmittelinformationen umfassen eine Liste der vorhandenen Betriebsmittel. Vorzugsweise umfassen die Betriebsmittelinformationen Betriebsmittelprofile. Ein Betriebsmittelprofil kann beispielsweise angeben, für welche Prozesse und/oder welche Arten von Prozessgegenständen das jeweilige Betriebsmittel eingesetzt werden kann und/oder darf. Es ist ferner denkbar, dass Betriebsmittel nur in definierten Zeitspannen eingesetzt werden können, zum Beispiel weil sie in anderen Zeitspannen anderweitig verwendet werden und/oder weil sie nur zu bestimmten Zeitspannen eingesetzt werden dürfen (zum Beispiel aus Gründen des Umweltschutzes, Emissionsschutzes, Lärmschutzes oder dergleichen). Vorzugsweise umfassen die Betriebsmittelinformationen daher Betriebsmittelverfügbarkeiten, die angeben, wann ein Betriebsmittel einsatzbereit/verfügbar ist.

Es ist denkbar, dass die Ressourcen-Informationen auch Hilfsmittelinformationen umfassen. Die Hilfsmittelinformationen können beispielsweise angaben, welche Menge und/oder Konzentration und/oder Reinheit eines Hilfsmittels vorhanden ist und ggf. welchen Beschränkungen der Einsatz eines Hilfsmittels unterliegt.

In einem weiteren Schritt des erfindungsgemäßen Verfahrens wird ein Ablaufplan erstellt. Der Ablaufplan gibt eine Möglichkeit an, wie die Aufgaben mit den vorhandenen Ressourcen erledigt werden können. Dabei ist der Ablaufplan das Ergebnis eines Optimierungsverfahrens. Das bedeutet, dass im Hinblick auf ein Optimierungsziel derjenige Ablaufplan ermittelt wird, der das Optimierungsziel am ehesten erfüllt (wobei denkbar ist, dass bei der Optimierung nicht das globale Maximum oder Minimum identifiziert wird, sondern aus Gründen der Verfahrenseffizienz die Suche nach dem globalen Maximum oder Minimum nach einer definierten Zeitspanne abgebrochen und die beste bis zum Abbruch identifizierte Lösung (lokales Maximum oder Minimum) für die Erstellung eines Ablaufplans verwendet wird). Ferner ist denkbar, dass nicht alle Aufgaben in dem Ablaufplan berücksichtigt sind, insbesondere dann nicht, wenn der Ablaufplan für eine definierte Zeitspanne erstellt wird, diese Zeitspanne jedoch nicht ausreicht, um alle Aufgaben mit den gegebenen Ressourcen zu erledigen. Derartige, im Ablaufplan nicht berücksichtigte Aufgaben werden in dieser Beschreibung als unberücksichtigte Aufgaben bezeichnet.

Die Erstellung des Ablaufplans erfolgt vorzugsweise mittels eines linearen Optimierungsverfahrens. Als lineare Optimierung oder auch Lineare Programmierung wird ein mathematisches Verfahren bezeichnet, bei dem eine Zielfunktion unter Beachtung verschiedener Nebenbedingungen (Restriktionen) minimiert oder maximiert wird, wobei die Variablen in Zielfunktion und Nebenbedingungen nur in der ersten Potenz auftreten.

Die Zielfunktion gibt hierbei an, nach welchen Kriterien der Ablaufplan zu optimieren ist. Die Randbedingungen ergeben sich zum Beispiel als Gleichungen und/oder Ungleichungen, welche die begrenzte Verfügbarkeit von Ressourcen in Relation zu den zu erfüllenden Aufgaben abbilden.

Diese Ausführungsform bietet den Vorteil, dass eines der zahlreichen bekannten linearen Optimierungsverfahren für die Optimierung herangezogen werden kann (siehe z.B. T. Unger, S. Dempe: Lineare Optimierung, Vieweg + Teubner, 2010, ISBN 978-3-8351-0139-5).

Besonders bevorzugt wird ein Verfahren der Gemischt-Ganzzahligen Linearen Optimierung verwendet (siehe z.B. R. Mansini et al.: Linear Mixed Integer Programing for Portfolio Optimization, Springer 2015, ISBN 978-3-319-18481-4).

Gemäß einer Ausführungsform der Erfindung wird mit der Zielfunktion die Anzahl der in einer definierten Zeitspanne prozessierten (einem Prozess zugeführten) Prozessgegenstände maximiert. Denkbar ist auch, dass die Zeitspanne zur Erfüllung aller anstehenden Aufgaben minimiert wird. Denkbar ist auch, dass die Auslastung der Betriebsmittel maximiert wird. Denkbar ist auch, dass die Zahl der in einer Zeitspanne zu prozessierenden Prozessgegenstände maximiert wird. Denkbar ist auch, dass die Zeitspannen, in denen Mitarbeiter untätig sind, minimiert wird. Denkbar ist auch, dass Kosten für die Stillzeiten von Betriebsmitteln minimiert werden. Denkbar ist auch, dass erledigte Aufgaben mit einem Wert verbunden sind, und dieser Wert maximiert wird. Weitere Optimierungsziele sind denkbar.

Auf Basis der zu erfüllenden Aufgabe(n) und des damit verbundenen Optimierungszieles wird eine entsprechende Zielfunktion formuliert (gebildet). Auf Basis der Mitarbeiterinformationen, der Betriebsmittelinformationen und ggf. von Hilfsmittelinformationen werden entsprechende Randbedingungen formuliert (gebildet).

Die Formulierung der Zielfunktion und der Randbedingungen erfolgt vorzugsweise automatisiert. Entsprechende Programme, die auf Basis der Aufgabeninformationen, der Betriebsmittelinformationen, der Mitarbeiterinformationen und ggf. von Hilfsmittelinformationen eine Zielfunktion mit Randbedingungen formulieren, lassen sich beispielsweise mittels Python, Matlab und/oder anderen vergleichbaren Programmiersprachen erzeugen.

Die mathematischen (Un-)Gleichungen lassen sich dann an einem Computerprogramm zur Lösung von linearen (Un)-Gleichungssystemen zuführen (z.B. Gurobi™ Solver (www.gurobi.com)). Die Lösung des (Un)-Gleichungssystems wird dann in einen Ablaufplan transformiert. Beispiele für die Erstellung von Ablaufplänen finden sich in EP3188096A1 und US20160148137.

Der Ablaufplan oder Teile davon können auf einer Ausgabeeinheit ausgegeben werden. Dabei können der Ablaufplan oder Teile davon auf einem Bildschirm angezeigt, auf einem Drucker ausgegeben und/oder in einem Datenspeicher gespeichert werden. Vorzugsweise wird der Ablaufplan grafisch dargestellt. Vorzugsweise umfasst der Ablaufplan verschiedene Ansichten wie beispielsweise eine Darstellung, in der für einen oder mehrere Mitarbeiter dargestellt ist, zu welchen Zeiten sie welche Prozessgegenstände einem oder mehreren Prozessen zuführen und/oder welche Prozesse sie ausführen, und/oder eine Darstellung, in der für ein oder für mehrere Betriebsmittel dargestellt ist, in welchen Zeitspannen sie in der Ausführung welcher Prozess eingesetzt werden. Weitere Ansichten sind denkbar. In einer bevorzugten Ausführungsform werden für jeden einzelnen Mitarbeiter, der mindestens einen Prozess im Rahmen des erstellten Ablaufplans ausführt, ein individueller Mitarbeiter-Ablaufplan erstellt und vorzugsweise nur gegenüber dem Mitarbeiter und ggf. einem oder mehreren Fachvorgesetzten und/oder disziplinarisch Vorgesetzen des Mitarbeiters angezeigt. Der individuelle Mitarbeiter-Ablaufplan zeigt für den jeweiligen Mitarbeiter Zeitspannen und diejenigen Prozesse, die er in den Zeitspannen ausführen soll, an. Vorzugsweise ist das erfindungsgemäße Computersystem so konfiguriert, dass Mitarbeiter nur diejenigen Teile des Ablaufplans einsehen (sich ausgeben lassen können), die sie betreffen.

In einer bevorzugten Ausführungsform liegen Betriebsmittelinformationen, Mitarbeiterinformationen, ggf. Hilfsmittelinformationen und Aufgabeninformationen in tabellarischer Form in einer oder in mehreren relationalen Datenbanken vor. Das erfindungsgemäße Computersystem ist konfiguriert, "auf Knopfdruck" mittels der gespeicherten Daten die Nutzungsfunktion inklusive der Randbedingungen zu ermitteln bzw. zu parametrisieren, das entstandene (Un-)Gleichungssystem zu lösen und die Lösung in Form eines Ablaufplans grafisch darzustellen.

Für jeden Ablaufplan kann ein Performance-Wert erzeugt werden. Der Performance-Wert ist ein Maß für den Erfolg oder die Güte eines Ablaufplans. Bei dem Performance-Wert handelt es sich vorzugsweise um das Optimum (das lokale oder globale Minimum oder Maximum), das bei dem Optimierungsverfahren identifiziert worden ist. Der Performance-Wert hängt eng mit dem Optimierungsziel zusammen. Besteht das Optimierungsziel beispielsweise in einer möglichst großen Anzahl an Prozessgegenständen, die in einer Zeitspanne bearbeitet werden soll, so gibt der Performance-Wert beispielsweise die Zahl der Prozessgegenstände an, die bei der Durchführung des Ablaufplans in der Zeitspanne verarbeitet werden. Besteht das Optimierungsziel beispielsweise in einer möglichst hohen Auslastung der Betriebsmittel, gibt der Performance-Wert die Auslastung an, die bei der Durchführung des Ablaufplans erzielt wird. Der Performance-Wert kann auch mehrere Werte umfassen, zum Beispiel bei kombinierten Optimierungszielen. Vorzugsweise ist das erfindungsgemäße Computersystem konfiguriert, einen Performance-Wert auf Basis des Ergebnis des Optimierungsverfahrens zu ermitteln und über eine Ausgabeeinheit auszugeben.

In einer Ausführungsform ist das erfindungsgemäße Computersystem konfiguriert, den Performance-Wert mit einem definierten Referenzwert zu vergleichen und bei einer definierten Abweichung vom Referenzwert eine Mitteilung auszugeben. Der Referenzwert kann zum Beispiel ein Schwellenwert sein, der mindestens erreicht sein sollte. Liegt der Performance-Wert unter dem Schwellenwert, kann es sein, dass Maßnahmen getroffen werden müssen. Der Schwellenwert kann zum Beispiel eine Mindestauslastung angeben. Liegt der Performance-Wert unterhalb der Mindestauslastung, kann es sein, dass ein Betrieb unwirtschaftlich ist. Die Mitteilung kann darauf hinweisen, dass eine Erledigung der Aufgaben gemäß Ablaufplan trotz einer Optimierung zu einem unwirtschaftlichen Ergebnis führt.

In einer bevorzugten Ausführungsform ist das erfindungsgemäße Computersystem konfiguriert, eine oder mehrere Änderungen zu empfangen und/oder zu erkennen. Ein solche Änderung kann eine oder mehrere Ressourcen-Informationen und/oder Aufgabeninformationen betreffen. Denkbar ist zum Beispiel, dass ein Mitarbeiter erkrankt und daher nicht zur Verfügung steht. Daraus ergibt sich eine Änderung der Mitarbeiterverfügbarkeit und eine Änderung der Mitarbeiterinformationen. Denkbar ist zum Beispiel, dass ein Betriebsmittel defekt ist und nicht mehr zur Verfügung steht. Daraus ergibt sich eine Änderung der Betriebsverfügbarkeit und eine Änderung der Betriebsmittelinformationen. Denkbar ist zum Beispiel, dass ein Hilfsmittel nicht geliefert wurde und daher nicht verfügbar ist und das Hilfsmittel durch ein anderes Hilfsmittel ersetzt werden muss. Daraus ergibt sich eine Änderung der Hilfsmittelinformationen. Denkbar ist, dass eine Aufgabe eher erledigt werden muss, als ursprünglich geplant. Daraus ergibt sich eine Änderung der Aufgabeninformationen. Denkbar ist, dass ein Prozessgegenstand nicht wie geplant eingetroffen ist, und daher nicht dem vorgesehenen Prozess zugeführt werden kann. Daraus ergibt sich eine Änderung der Aufgabeninformationen. Weitere Änderungen sind denkbar.

Eine Änderung kann beispielsweise als E-Mail oder vergleichbare elektronische Nachricht empfangen werden und/oder von einem Nutzer über eine Eingabeeinheit in das Computersystem eingegeben werden.

In einer Ausführungsform ist das erfindungsgemäße Computersystem konfiguriert, einem Nutzer einen Zugang zu den vorzugsweise in Tabellenform in einer oder mehreren Datenbank gespeicherten Betriebsmittelinformationen, Mitarbeiterinformationen, Hilfsmittelinformationen und/oder Aufgabeninformationen zu verschaffen und Änderungen in Form von Eingaben des Nutzers entgegenzunehmen. Die Eingaben können zum Beispiel mittels Tastatur, Mikrofon (Spracheingabe), Maus, Touchpad und/oder dergleichen vorgenommen werden. Das Computersystem kann konfiguriert sein, eine Eingabe betreffend die Ressourcen-Informationen und/oder die Aufgabeninformationen unmittelbar als eine Änderung zu registrieren. Das Computersystem kann konfiguriert sein, zu definierten Zeiten und/oder in definierten Zeitabständen und/oder bei Eintreten definierter Ereignisse die in einer oder mehreren Datenbanken gespeicherten Ressourcen-Informationen und/oder Aufgabeninformationen auf eine oder mehrere Änderungen zu prüfen.

Das erfindungsgemäße Computersystem kann konfiguriert sein, bei vorliegenden Änderungen der Ressourcen-Informationen und/oder Aufgabeninformationen unmittelbar einen neuen Ablaufplan zu erzeugen, der ebenfalls (wie der vorherige Ablaufplan) auf ein Optimierungsziel optimiert ist (optimierter Ablaufplan).

Das erfindungsgemäße Computersystem ist vorzugsweise konfiguriert, Änderungen am Ablaufplan (Änderungen, die unmittelbar am erstellen Ablaufplan vorgenommen werden) zu empfangen. Vorzugsweise wird der Ablaufplan oder werden Teile davon auf einem Bildschirm gegenüber einem Nutzer angezeigt. Das Computersystem ist konfiguriert, von einem Nutzer Eingaben über eine Eingabeeinheit wie beispielsweise Tastatur und/oder Maus und/oder Touchpad und/oder Mikrofon und/oder dergleichen zu empfangen. Eine solche Eingabe kann eine direkte Änderung des Ablaufplans betreffen. Zum Beispiel kann der Nutzer eine Änderung vornehmen, die die Verfügbarkeit eines Mitarbeiters betrifft. Ist ein Mitarbeiter nicht wie geplant verfügbar, kann der Nutzer für den Mitarbeiter in den Zeitspannen, die im Ablaufplan angeben sind und in denen der Mitarbeiter nicht verfügbar ist, einen entsprechenden Eintrag vornehmen. Die Konsequenz ist, dass die Prozesse, die gemäß Ablaufplan von diesem Mitarbeiter ausgeführt werden sollten, nun nicht wie geplant ausgeführt werden können. Das Computersystem ist vorzugsweise konfiguriert, die sich aus einer Änderung eines Nutzers am Ablaufplan ergebenden weiteren Änderungen zu identifizieren und auszugeben. Vorzugsweise werden die sich aus der Änderung ergebenden weiteren Änderungen auf einem Bildschirm kenntlich gemacht, zum Beispiel durch eine Markierung und/oder eine spezifische visuelle Darstellung im/beim Ablaufplan. Denkbar ist ferner, dass alle sich ergebenden weiteren Änderungen in einer Liste aufgeführt werden, die ausgegeben werden kann. Es wird also ein geänderter Ablaufplan erstellt, der die Änderung des Nutzers umfasst sowie alle sich aus der Änderung des Nutzers ergebenden weiteren Änderungen, wobei die weiteren Änderungen vorzugsweise markiert und/oder hervorgehoben werden, damit der Nutzer die Konsequenzen der Änderung direkt erkennen kann.

Dieser geänderte Ablaufplan ist nicht optimiert, da Änderungen manuell vorgenommen worden sind. In einer bevorzugten Ausführungsform wird der sich für den geänderten Ablaufplan ergebende Performance-Wert errechnet und ausgeben. In einer bevorzugten Ausführungsform wird der sich für den geänderten Ablaufplan ergebende Performance-Wert mit einem Referenzwert und/oder mit dem Performance-Wert des Ablaufplans vor der Änderung / vor den Änderungen verglichen. Vorzugsweise wird bei einer definierten Abweichung eine Mitteilung an einen Nutzer ausgegeben.

Es kann zum Beispiel sein, dass geringe Abweichungen beim Performance-Wert tolerierbar sind. Solange die Abweichung unterhalb eines Schwellenwerts liegt, kann der geänderte Ablaufplan erledigt werden. Erst ab einer Überschreitung der Abweichung oberhalb eines Schwellenwerts kann es sein, dass ein neuer, optimierter Ablaufplan erstellt werden muss. Es ist denkbar, dass die Mitteilung den Nutzer auffordert, den geänderten Ablaufplan einer Optimierung zuzuführen. Bei einer solchen Optimierung werden geänderte Ressourcen-Informationen und/oder Aufgabeninformationen, in denen die Änderungen aufgenommen sind, dem Optimierungsverfahren zugeführt (Erstellen eines (Un-)Gleichungssystem, Lösen des (Un-)Gleichungssystems). Das Ergebnis ist ein neuer, optimierter Ablaufplan.

Das Computersystem kann konfiguriert sein, bei einer Änderung den Nutzer darüber zu informieren, dass eine Änderung vorliegt. Der Nutzer kann beispielsweise mittels einer Textnachricht, die auf einem Bildschirm angezeigt, auf einem Drucker ausgegeben und/oder elektronisch z.B. als E-Mail, SMS oder dergleichen an den Nutzer übermittelt wird, informiert werden.

Das Computersystem kann konfiguriert sein, den Nutzer bei Vorliegen einer Änderung aufzufordern, eine Eingabe vorzunehmen, wobei die Eingabe das Computersystem veranlassen kann, einen neuen (optimierten) Ablaufplan unter Berücksichtigung der Änderung zu ermitteln oder die Änderung aufzunehmen und einen geänderten Ablaufplan zu erzeugen, der die Änderung berücksichtigt, der jedoch nicht optimiert ist.

Das Computersystem kann konfiguriert sein, einen Ablaufplan für eine definierte Zeitspanne zu erstellen, wie beispielsweise für einen Tag, oder mehrere Tage (2, 3, 4, 5 oder 6 Tage) oder eine Arbeitswoche oder eine Woche oder zwei Wochen oder drei Wochen oder vier Wochen oder einen Monat oder mehrere Monate. Es ist denkbar, dass nicht alle zu erledigenden Aufgaben in der definierten Zeitspanne erledigt werden können; es ist also denkbar, dass nach Erstellen eines Ablaufplans für eine definierte Zeitspanne Aufgaben verbleiben, die in dem Ablaufplan nicht berücksichtigt sind. Vorzugsweise ist das erfindungsgemäße Computersystem konfiguriert, derartige verbleibende Aufgaben auszugeben, zum Beispiel auf einem Bildschirm anzuzeigen, auf einem Drucker auszudrucken und/oder in einem Datenspeicher zu speichern. Vorzugsweise ist das Computersystem konfiguriert, Aufgaben zu analysieren und dabei zu prüfen, inwieweit eine Aufgabe in Teilaufgaben unterteilt werden kann. Das erfindungsgemäße Computersystem kann konfiguriert sein, etwaige Teilaufgabe zu identifizieren und anzuzeigen. Es ist beispielsweise denkbar, dass insbesondere für verbleibende Aufgaben angezeigt wird, ob sie in Teilaufgaben geteilt werden können und in welche Teilaufgaben zu geteilt werden können. Es ist auch denkbar, dass ein Nutzer das Computersystem durch eine Eingabe dazu veranlassen kann, eine Aufgabe in Teilaufgaben zu unterteilen. Zusätzlich oder anstelle der verbleibenden Aufgaben können die verbleibenden Teilaufgaben angezeigt werden.

Es ist denkbar, dass das erfindungsgemäße Computersystem konfiguriert ist, von einem Nutzer eine Eingabe entgegenzunehmen, die das Computersystem veranlasst, verbleibende Teilaufgaben einem Mitarbeiter zuzuordnen. In einem solchen Fall ergibt sich ein geänderten Ablaufplan, bei dem eine Teilaufgabe, die im vorherigen Ablaufplan unberücksichtigt geblieben ist, im geänderten Ablaufplan berücksichtigt ist und von dem Mitarbeiter, dem sie zugeordnet worden ist, ausgeführt wird.

Denkbar ist ferner, dass nach der Teilung einer oder mehrerer Aufgaben in Teilaufgaben das erfindungsgemäße Computersystem auf eine Eingabe eines Nutzers hin oder automatisiert, einen neuen, optimierten Ablaufplan erstellt, bei dem eine oder mehrere Teilaufgaben berücksichtigt sind, d.h. aufgeführt sind.

Das erfindungsgemäße Computersystem kann konfiguriert sein, von einem Nutzer eine Änderungsabsicht zu empfangen, wobei die Änderungsabsicht eine Aufgabe, eine Teilaufgabe, einen Mitarbeiter, ein Betriebsmittel, ein Hilfsmittel, einen Prozess und/oder einen Prozessgegenstand betrifft, für die/den der Nutzer eine Änderung vornehmen möchte. Es ist zum Beispiel denkbar, dass der Nutzer einen oder mehrere der genannten Gegenstände mittels einer Maus, einer Tastatur, einem Touchpad oder dergleichen auswählt. Durch eine solche Auswahl zeigt der Nutzer seine Änderungsabsicht an. Das Computersystem kann konfiguriert sein, für den ausgewählten Gegenstand vorzugsweise in dem Ablaufplan Änderungsmöglichkeiten anzuzeigen, so dass der Nutzer erkennen kann, welche Änderungen er für den Gegenstand vornehmen kann. Es ist zum Beispiel denkbar, dass ein Nutzer eine Teilaufgabe von einem Mitarbeiter in dem Ablaufplan wegnehmen und an einen anderen Mitarbeiter übertragen möchte. Der Nutzer wählt die Teilaufgabe aus und das Computersystem zeigt dem Nutzer an, welche Mitarbeiter die Teilaufgabe übernehmen können. Dabei kann das Computersystem beispielsweise konfiguriert sein zu prüfen, wie lange die Teilaufgabe dauert und/oder welche Befähigungen ein Mitarbeiter haben muss, um die Teilaufgabe auszuführen, und/oder ob es einen Mitarbeiter gibt, der in einer Zeitspanne, die mindestens so lang ist wie die Teilaufgabe dauert, unbeschäftigt ist und/oder ob der unbeschäftigte Mitarbeiter die nötige Befähigung hat, die Teilaufgabe zu übernehmen. Das Computersystem kann konfiguriert sein, von dem Nutzer eine Auswahl zu empfangen, wobei die Auswahl eine der aufgezeigten Änderungsmöglichkeiten spezifiziert.

Die Erfindung wird nachfolgend anhand von Figuren näher erläutert, ohne die Erfindung auf die in den Figuren gezeigten Merkmale und Merkmalskombinationen beschränken zu wollen.

Es zeigen:

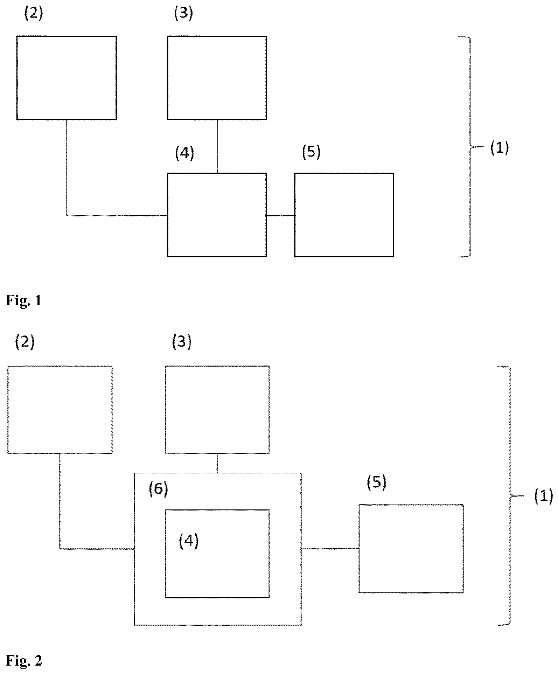

Fig. 1 zeigt beispielhaft und schematisch eine Ausführungsform eines erfindungsgemäßen Computersystems.

Das Computersystem (1) umfasst eine Datenbank (2), eine Empfangseinheit (3), eine Planungseinheit (4) und eine Ausgabeeinheit (5).

In der Datenbank (2) sind Informationen zu den vorhandenen Ressourcen, insbesondere den vorhandenen Mitarbeitern und Betriebsmitteln vorzugsweise in Tabellenform gespeichert.

Über die Empfangseinheit (3) werden Aufgabeninformationen empfangen, die Auskunft über Prozessgegenstände geben, die einem oder mehreren Prozessen zugeführt werden sollen. Mittels der Planungseinheit (4) wird auf Basis der in der Datenbank (2) gespeicherten Daten und den über die Empfangseinheit (3) empfangenen Informationen ein Ablaufplan erstellt.

Der Ablaufplan oder ein Teil davon kann über die Ausgabeeinheit (5) ausgegeben werden.

Fig. 2 zeigt beispielhaft und schematisch eine weitere Ausführungsform eines erfindungsgemäßen Computersystems.

Das Computersystem (1) umfasst eine Datenbank (2), eine Empfangseinheit (3), eine Steuereinheit (6), eine Planungseinheit (4) und eine Ausgabeeinheit (5). Die Planungseinheit (4) ist Bestandteil der Steuereinheit (6). Denkbar ist aber auch, dass die Planungseinheit (4) ein von der Steuereinheit (6) separater Bestandteil des Computersystems ist.

In der Datenbank (2) sind Ressourcen-Informationen gespeichert. Die Ressourcen-Informationen umfassen Mitarbeiterinformationen über eine Mehrzahl an Mitarbeitern, Prozessinformationen über eine Mehrzahl an Prozessen, Betriebsmittelinformationen über eine Mehrzahl an Betriebsmitteln und optional Hilfsmittelinformationen über eine Mehrzahl an Hilfsmitteln.

Es ist auch denkbar, dass mehrere Datenbanken vorhanden sind und die Ressourcen-Informationen auf die mehreren Datenbanken verteilt sind. So kann es beispielsweise separate Datenbanken für die Mitarbeiterinformationen, die Prozessinformationen, die Betriebsmittelinformationen und die Hilfsmittelinformationen geben.

Die Steuereinheit (6) ist konfiguriert, die Empfangseinheit (3) zu veranlassen, Aufgabeninformationen zu empfangen. Die Aufgabeninformationen spezifizieren eine Mehrzahl von Prozessgegenständen, die jeweils einem oder mehreren Prozessen zugeführt werden sollen.

Die Steuereinheit (6) ist konfiguriert, die Planungseinheit (4) zu veranlassen, anhand der Ressourcen-Informationen und der Aufgabeninformationen einen Ablaufplan zu erstellen, wobei der Ablaufplan Angaben darüber umfasst, in welchen Zeitspannen die Prozesse ausgeführt werden sollen, von welchen Mitarbeitern die Prozesse ausgeführt werden sollen, und welche Betriebsmittel bei der Ausführung der Prozesse eingesetzt werden sollen. Dabei ist der Ablaufplan im Hinblick auf ein Optimierungsziel optimiert.

Die Steuereinheit (6) ist konfiguriert, die Ausgabeeinheit (5) zu veranlassen, den Ablaufplan oder einen Teil des Ablaufplans anzuzeigen und/oder auszudrucken und/oder zu speichern.

Fig. 3 zeigt beispielhaft und schematisch in Form eines Ablaufdiagramms eine Ausführungsform des erfindungsgemäßen Verfahrens. Das Verfahren (100) umfasst die Schritte:
(110) Empfangen von Aufgabeninformationen, wobei die Aufgabeninformationen zumindest eine Mehrzahl von Prozessgegenständen spezifizieren, die einem oder mehreren Prozessen zugeführt werden sollen,
(120) Empfangen oder Ermitteln von Prozessinformationen, wobei die Prozessinformationen die Prozesse spezifizieren, denen die Prozessgegenstände zugeführt werden sollen,
(130) Ermitteln von Betriebsmittelinformationen für eine Mehrzahl an Betriebsmitteln,
(140) Ermitteln von Mitarbeiterinformationen für eine Mehrzahl an Mitarbeitern,
(150) Erstellen eines Ablaufplans anhand der Aufgabeninformationen, der Prozessinformationen, der Betriebsmittelinformationen und der Mitarbeiterinformationen, wobei der Ablaufplan Angaben darüber umfasst, in welchen Zeitspannen die Prozesse ausgeführt werden sollen, von welchen Mitarbeitern die Prozesse ausgeführt werden sollen, und welche Betriebsmittel bei der Ausführung der Prozesse eingesetzt werden sollen,
   wobei der Ablaufplan im Hinblick auf ein Optimierungsziel optimiert ist,
(160) Anzeigen und/oder Ausgeben und/oder Speichern zumindest eines Teils des Ablaufplans.

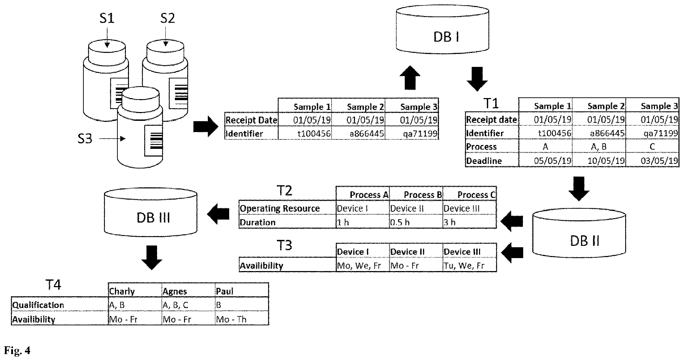

Fig. 4 zeigt beispielhaft und schematisch eine konkrete Ausgestaltung der Schritte (110), (120), (130) und (140) des in Fig. 3 dargestellten erfindungsgemäßen Verfahrens.

In einem ersten (vorgelagerten) Schritt werden Prozessgegenstände in Form von Proben Sl, S2 und S3 empfangen. Die Proben S1, S2 und S3 befinden sich jeweils in einem Behälter, der mit einem Strichcode ausgestattet ist. Der Strichcode umfasst in maschinenlesbarer Form eine eindeutige Kennung für jede einzelne Probe. Nachdem die Proben Sl, S2 und S3 eingetroffen sind, werden die Strichcodes mit einem Strichcode-Leser ausgelesen. Für jede Probe wird das Eingangsdatum (*Receipt Date*) und die eindeutige Kennung (*Identifier*) festgehalten. Bei der eindeutigen Kennung handelt es sich um Aufgabeninformationen, die die Prozessgegenstände spezifizieren, die einem oder mehreren Prozessen zugeführt werden sollen.

Anhand der eindeutigen Kennung werden weitere Aufgabeninformationen aus einer Datenbank DB I ermittelt. In der Datenbank DB I ist für die Proben S1, S2 und S3 hinterlegt, welchem Prozess / welchen Prozessen (Process A, B, C) sie zugeführt werden sollen und wann die Prozesse abgeschlossen sein sollen (*Deadline*). Die Probe S1 (*Sample 1*) soll beispielsweise dem Prozess A bis zum 05/05/19 zugeführt worden sein.

In einem weiteren Schritt werden für die Prozesse A, B und C Prozessinformationen aus einer Datenbank DB II ermittelt. Bei der Datenbank DB II kann es sich um dieselbe Datenbank wie die Datenbank DB I oder um eine separate Datenbank handeln. Die Prozessinformationen spezifizieren die Prozesse A, B und C, denen die Prozessgegenstände zugeführt werden sollen. Im vorliegenden Beispiel ist für die Prozesse A, B und C in der Datenbank DB II hinterlegt, welche Betriebsmittel (*Operating Resource*) zu ihrer Ausführung erforderlich sind und wie lange der Prozess dauert (*Duration*). Im vorliegenden Beispiel ist zur Ausführung des Prozesses B beispielsweise das Betriebsmittel *Device II* erforderlich und die Ausführung dauert eine halbe Stunde (0.5 h).

In einem weiteren Schritt werden aus der Datenbank II Betriebsmittelinformationen für die Betriebsmittel Device I, Device II und Device III ermittelt, die in den Prozessen A, B und C eingesetzt werden. Für die Betriebsmittel ist in der Datenbank DB II hinterlegt, wann das jeweilige Betriebsmittel verfügbar ist (*Availability*). Für das Betriebsmittel *Device I* ist beispielsweise hinterlegt, dass es montags, mittwochs und freitags verfügbar ist (Mo, We, Fr).

In einem weiteren Schritt werden aus einer Datenbank DB III Mitarbeiterinformationen für eine Mehrzahl an Mitarbeitern ermittelt. Bei der Datenbank DB III kann es sich um dieselbe Datenbank wie die Datenbank DB I oder die Datenbank II oder um eine separate Datenbank handeln. Die Mitarbeiterinformationen betreffen die Mitarbeiter, die die Prozesse A, B und C ausführen können. Für jeden Mitarbeiter ist in der Datenbank DB III erfasst, welche Prozesse er/sie ausführen kann/darf (*Qualification*) und wann der Mitarbeiter verfügbar ist (*Availibility*). Für den Mitarbeiter *Paul* ist beispielsweise erfasst, dass er den Prozess B ausführen kann/darf und dass er montags bis donnerstags (Mo-Th) verfügbar ist.

Die in Fig. 4 gezeigten Tabellen Tl, T2, T3 und T4 repräsentieren Aufgabeninformationen (Tl), Prozessinformationen (T2), Betriebsmittelinformationen (T3) und Mitarbeiterinformationen (T4).

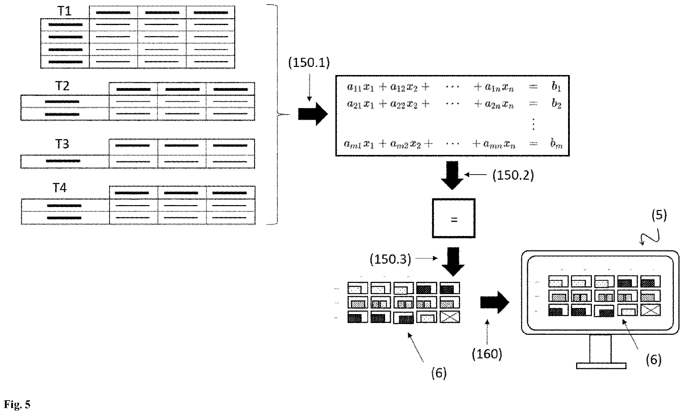

Fig. 5 zeigt beispielhaft und schematisch eine konkrete Ausgestaltung der Schritte (150) und (160) des in Fig. 3 dargestellten erfindungsgemäßen Verfahrens, wobei Schritt (150) aus Fig. 3 in Fig. 5 in drei Teilschritte (150.1), (150.2) und (150.3) unterteilt ist.

In Teilschritt (150.1) wird auf Basis der Tabellen Tl, T2, T3 und T4 aus Fig. 3 eine Zielfunktion inklusive von Randbedingungen in Form eines (Un-)Gleichungssystems formuliert (gebildet). Das (Un-)Gleichungssystem wird vorzugsweise automatisiert gebildet. Dies kann beispielsweise mittels Matlab oder Python erfolgen. In einem weiteren Teilschritt (150.2) wird das (Un-)Gleichungssystem gelöst. Auch dieser Schritt erfolgt vorzugsweise automatisiert, beispielsweise mittels einer Software für mathematische Optimierungen wie beispielsweise Gurobi Solver. Bei der Optimierung wird eine Lösung gesucht, die das Optimierungsziel am ehesten erreicht. Diese Lösung ist, je nach Formulierung der Zielfunktion, ein Maximum oder Minimum der Zielfunktion. In einem weiteren Teilschritt (150.3) wird aus der Lösung ein Ablaufplan (6) erzeugt. Auch dieser Schritt erfolgt vorzugsweise automatisiert, beispielsweise mittels Matlab oder Python. In einem weiteren Schritt (160) wird der Ablaufplan (6) oder ein Teil des Ablaufplans auf einer Ausgabeeinheit (5) wie beispielsweise einem Monitor angezeigt.

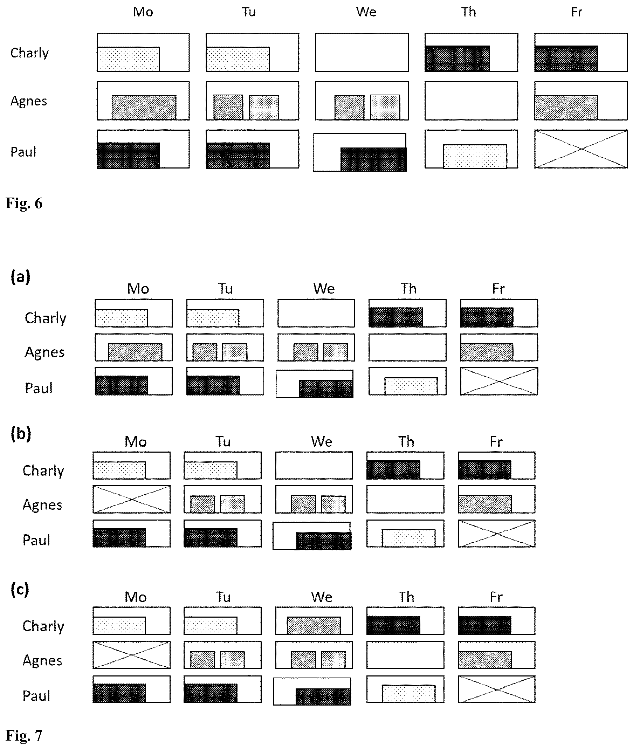

Fig. 6 zeigt ein Beispiel für einen Ablaufplan. Es ist ein Ablaufplan für eine Arbeitswoche mit den Arbeitstagen Montag bis Freitag (Mo, Tu, We, Th, Fr) dargestellt. Für die einzelnen Mitarbeiter (*Charly, Agnes, Paul*) ist dragestellt, an welchen Tagen sie welche Aufgabe zu erledigen haben. Die jeweilige Aufgabe ist als Schraffur gekennzeichnet. Die Schraffuren können verschiedene Bedeutungen haben, beispielsweise kann eine Schraffur einen Prozess kennzeichnen, den der jeweilige Mitarbeiter ausführen soll. Ferner kann eine Schraffur einen Prozessgegenstand oder eine Menge von Prozessgegenständen kennzeichnen, um die sich der jeweilige Mitarbeiter kümmern soll (indem er sie einem oder mehreren Prozessen zuführt). Ferner kann eine Schraffur ein Betriebsmittel kennzeichnen, das von dem jeweiligen Mitarbeiter bedient werden soll (wobei der jeweilige Mitarbeiter mit dem Betriebsmittel einen oder mehrere Prozesse an einem oder an mehreren Prozessgegenständen ausführt). Die Schraffur kann jedoch auch eine Kombination aus mehreren Gegenständen (Prozess, Prozessgegenstand, Betriebsmittel) kennzeichnen. Die Größe der schraffierten Fläche kann die Zeitspanne kennzeichnen, in denen der jeweilige Mitarbeiter mit der jeweiligen Aufgabe beschäftigt ist. Der Beginn und das Ende der schraffierten Fläche innerhalb des Rechtecks für den jeweiligen Tag und Mitarbeiter können beispielsweise Anfang und Ende der Tätigkeiten des jeweiligen Mitarbeiters anzeigen. Das Rechteck für den Mitarbeiter *Paul* am Freitag ist mit einem Kreuz versehen, was anzeigen soll, dass er Freitag nicht verfügbar ist.

Weitere Ablaufpläne und Darstellungen sind denkbar. Vorzugsweise sind das erfindungsgemäße Computersystem und das erfindungsgemäße Computerprogramm so konfiguriert, dass Ablaufpläne nicht nur für Mitarbeiter sondern auch für Prozessgegenstände und/oder Betriebsmittel erzeugt und ausgegeben werden können. Dabei kann ein Ablaufplan für Prozessgegenstände anzeigen, welche Prozess an den Prozessgegenständen in welchen Zeitspannen ausgeführt werden sollen und/oder welche Betriebsmittel für die Prozessierung der Prozessgegenstände in welchen Zeitspannen verwendet werden sollen und/oder welche Mitarbeiter die Prozessgegenstände in welchen Zeitspannen betreuen sollen. Ein Ablaufplan für Betriebsmittel kann anzeigen, welche Betriebsmittel zu welchen Zeitspannen verwendet werden sollen (z.B. von welchen Mitarbeitern, mit welchen Prozessgegenständen und/oder welche Prozess ausgeführt werden sollen).

Eine besondere Stärke der Erfindung liegt in der Möglichkeit, Änderungen an einem Ablaufplan vorzunehmen.

Fig. 7 zeigt eine Möglichkeit für eine Änderung. In Fig. 7(a) ist der in Fig. 6 bereits gezeigte Ablaufplan dargestellt. Es stellt sich heraus, dass die Mitarbeiterin *Agnes* am Montag nicht verfügbar ist. Das erfindungsgemäße Computersystem und das erfindungsgemäße Computerprogramm sind so konfiguriert, dass ein Nutzer das Rechteck, das den Arbeitstag *Montag* für die Mitarbeiterin *Agnes* repräsentiert, z.B. mit einer Maus auswählen und die Nichtverfügbarkeit eintragen kann. In Fig. 7(b) ist als Resultat das Rechtecke, das den Arbeitstag *Montag* für die Mitarbeiterin *Agnes* repräsentiert, mit einem Kreuz versehen. Das erfindungsgemäße Computersystem und das erfindungsgemäße Computerprogramm sind so konfiguriert, dass sie eine Änderung, insbesondere eine Änderung, die dazu führt, dass eine Aufgabe nicht planungsgemäß ausgeführt werden kann, erkennen. Das erfindungsgemäße Computersystem und das erfindungsgemäße Computerprogramm sind so konfiguriert, dass sie den Benutzer eine Mitteilung auf einem Monitor anzeigen, die darauf hinweist, das eine Aufgabe nicht planungsgemäß ausgeführt werden kann. Das erfindungsgemäße Computersystem und das erfindungsgemäße Computerprogramm sind so konfiguriert, dass sie den Nutzer auffordern, zu entscheiden, ob ein neuer Ablaufplan erstellt werden soll. Entscheidet sich der Nutzer für die Erstellung eines neuen Ablaufplans kann er dies beispielsweise durch eine Eingabe in das Computersystem bestätigen. Das erfindungsgemäße Computersystem und das erfindungsgemäße Computerprogramm sind so konfiguriert, dass sie auf Basis der geänderten Daten (*Agnes* ist am *Montag* nicht mehr verfügbar), ein neues (Un-)Gleichungssystem aufstellen, dieses lösen und die Lösung ausgeben. Fig. 7(c) zeigt einen neuen Ablaufplan, bei dem die für den Arbeitstag *Montag* für die Mitarbeiterin *Agnes* geplante Aufgabe nun am Arbeitstag *Mittwoch* vom Mitarbeiter *Charly* erledigt werden soll.

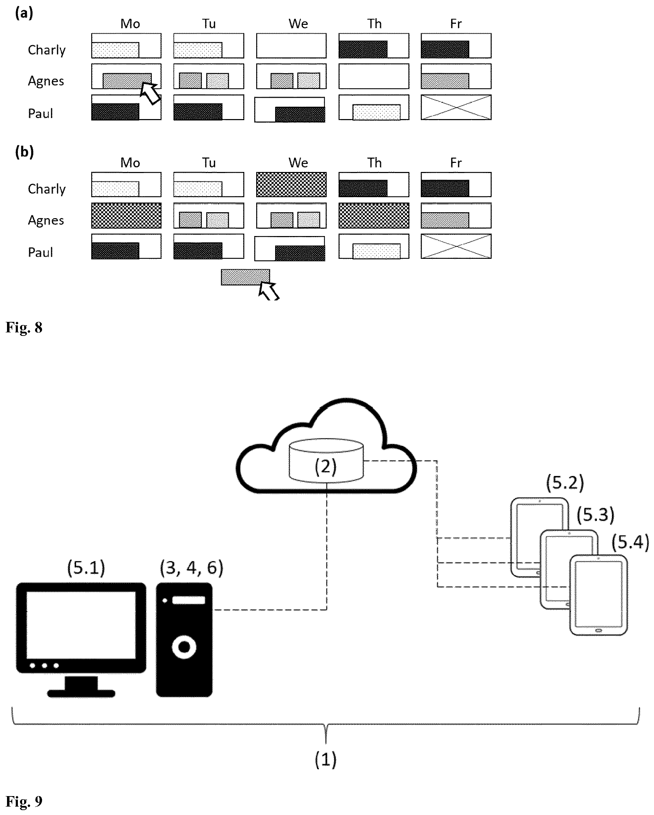

Fig. 8 zeigt eine weitere Möglichkeit der Änderung eines Ablaufplan. In Fig. 8(a) ist der in Fig. 6 bereits gezeigte Ablaufplan dargestellt. Zusätzlich ist ein Pfeil dargestellt, der einen Mauszeiger repräsentieren soll. Das erfindungsgemäße Computersystem und das erfindungsgemäße Computerprogramm sind so konfiguriert, dass ein Nutzer in dem Ablaufplan eine Aufgabe auswählen und verschieben kann. In Fig. 8(a) und Fig. 8(b) ist dargestellt, dass der Nutzer die für den Arbeitstag *Montag* für die Mitarbeiterin *Agnes* vorgesehene Aufgabe mit Hilfe des Mauszeigers auswählt. Das erfindungsgemäße Computersystem und das erfindungsgemäße Computerprogramm sind so konfiguriert, dass sie die Randbedingungen prüfen und diejenigen Arbeitstage von Mitarbeitern hervorheben, an denen die selektierte Aufgabe ausgeführt werden kann, ohne dass zusätzliche Ressourcen erforderlich sind. IM vorliegenden Fall sind die jeweiligen Arbeitstage mit einem Schachbrettmuster markiert. Der Nutzer kann nun selbst entscheiden, zu welchem Arbeitstag er die Aufgabe verschieben will.

Fig. 9 zeigt beispielhaft und schematisch eine bevorzugte Ausführungsform des erfindungsgemäßen Computersystems. Das Computersystem (1) umfasst einen Datenbank (2), eine Empfangseinheit (3), eine Planungseinheit (4) und eine Mehrzahl an Ausgabeeinheiten (5.1, 5.2, 5.3 und 5.4). Die Empfangseinheit (3), die Planungseinheit (4) und eine Ausgabeeinheit (5.1) sind Bestandteile eines ersten Computersystems. Mit dem ersten Computersystem können Ablaufpläne erstellt und aktualisiert werden. Eingaben in das erste Computersystem erfolgen über eine Maus oder Tastatur (in der Figur nicht explizit dargestellt). Das erste Computersystem ist konfiguriert, über die Empfangseinheit (3) Aufgabeninformationen, Prozessinformationen, Betriebsmittelinformationen und Mitarbeiterinformationen zu empfangen. Die Informationen stammen aus der Datenbank (2), die als Cloud-Speicher aufgesetzt ist, d.h. dass ein oder mehrere Computersysteme Informationen über ein Netzwerk (z.B. ein Intranet oder das Internet) von dem Cloud-Speicher empfangen und an den Cloud-Speicher über übermitteln können. Anhand der vom Cloud-Speicher empfangenen und/oder abgerufenen Informationen erstellt die Planungseinheit (4) einen Ablaufplan, der wiederum in dem Cloudspeicher gespeichert werden kann. Der Ablaufplan kann dann von verschiedenen Endgeräten abgerufen und angezeigt werden. Im vorliegenden Fall kann die Ausgabe des Ablaufplans über die Ausgabeeinheit (5.1) des ersten Computersystems oder über die Ausgabeeinheiten (5.2, 5.3, 5.4) weiterer Computersysteme, die im vorliegenden Fall als Tablet-Computer ausgeführt sind, erfolgen. Es ist denkbar, dass sich jeder Mitarbeiter über seinen Tablet-Computer einen individuellen Ablaufplan anzeigen lassen kann, damit der Mitarbeiter darüber informiert ist, welche Aufgabe er wann erledigen soll.

## Patentansprüche

1. Computersystem umfassend:
- eine Datenbank oder mehrere Datenbanken, in der / in denen Ressourcen-Informationen gespeichert sind, wobei die Ressourcen-Informationen
• Mitarbeiterinformationen über eine Mehrzahl an Mitarbeitern,
• Prozessinformationen über eine Mehrzahl an Prozessen,
• Betriebsmittelinformationen über eine Mehrzahl an Betriebsmitteln
• und optional Hilfsmittelinformationen über eine Mehrzahl an Hilfsmitteln
umfassen,
- eine Empfangseinheit zum Empfang von Aufgabeninformationen, wobei die Aufgabeninformationen zumindest eine Mehrzahl von Prozessgegenständen spezifizieren, die jeweils einem oder mehreren Prozessen zugeführt werden sollen,
- eine Planungseinheit, zur Erstellung eines Ablaufplans anhand der Ressourcen-Informationen und der Aufgabeninformationen, wobei der Ablaufplan Angaben darüber umfasst,
• in welchen Zeitspannen die Prozesse ausgeführt werden sollen,
• von welchen Mitarbeitern die Prozesse ausgeführt werden sollen,
• welche Betriebsmittel bei der Ausführung der Prozesse eingesetzt werden sollen,
• und optional welche Hilfsmittel bei der Ausführung der Prozesse eingesetzt werden sollen,
wobei der Ablaufplan im Hinblick auf ein Optimierungsziel optimiert ist,
- eine Ausgabeeinheit zum Ausgeben des Ablaufplan oder eines Teil davon.

2. Computersystem gemäß Anspruch 1, umfassend
- die Datenbank oder die mehreren Datenbanken mit den Ressourcen-informationen
- eine Steuereinheit,
- die Empfangseinheit,
- die Planungseinheit und
- die Ausgabeeinheit
∘ wobei die Steuereinheit konfiguriert ist, die Empfangseinheit zu veranlassen, die Aufgabeninformationen zu empfangen,
∘ wobei die Steuereinheit konfiguriert ist, die Planungseinheit zu veranlassen, den Ablaufplan anhand der Ressourcen-Informationen und der Aufgabeninformationen zu erstellen,
∘ wobei die Steuereinheit konfiguriert ist, die Ausgabeneinheit zu veranlassen, den Ablaufplan oder einen Teil des Ablaufplans anzuzeigen, auszudrucken und/oder zu speichern.

3. Computersystem gemäß Anspruch 1 oder 2, wobei die Planungseinheit konfiguriert ist, anhand der Ressourcen-Informationen und der Aufgabeninformationen ein System aus Gleichungen und/oder Ungleichungen zu erstellen, das System aus Gleichungen und/oder Ungleichungen mittels eines Optimierungsverfahrens vorzugsweise mittels eines Verfahrens der Gemischt-Ganzzahligen Linearen Optimierung zu lösen, und die Lösung in den Ablaufplan zu transformieren.

4. Computersystem gemäß einem der Ansprüche 2 oder 3,
- wobei die Steuereinheit konfiguriert ist, die Planungseinheit zu veranlassen, für den Ablaufplan einen Performance-Wert zu ermitteln,
- wobei die Steuereinheit konfiguriert ist, die Planungseinheit zu veranlassen, den Performance-Wert mit einem Referenzwert zu vergleichen,
- wobei die Steuereinheit konfiguriert ist, die Ausgabeeinheit zu veranlassen, eine Mitteilung auszugeben, wenn der Performance-Wert in definierter Weise vom Referenzwert abweicht.

5. Computersystem gemäß einem der Ansprüche 2 bis 4,
- wobei die Steuereinheit konfiguriert ist, die Empfangseinheit zu veranlassen, eine Änderung am Ablaufplan von einem Nutzer zu empfangen,
- wobei die Steuereinheit konfiguriert ist, die Planungseinheit zu veranlassen, den Ablaufplan zu analysieren und weitere Änderungen zu identifizieren, die sich als Folge aus der empfangenen Änderung ergeben,
- wobei die Steuereinheit konfiguriert ist, die Planungseinheit zu veranlassen, einen geänderten Ablaufplan zu erstellen, wobei der geänderte Ablaufplan die empfangene Änderung und die identifizierten weiteren Änderungen umfasst,
- wobei die Steuereinheit konfiguriert ist, die Ausgabeeinheit zu veranlassen, den geänderten Ablaufplan auszugeben, wobei die empfangene Änderung und/oder die identifizierten weiteren Änderungen in dem geänderten Ablaufplan vorzugsweise hervorgehoben sind.

6. Computersystem gemäß einem der Ansprüche 2 bis 5,
- wobei die Steuereinheit konfiguriert ist, die Planungseinheit zu veranlassen, für den Ablaufplan einen ersten Performance-Wert zu ermitteln,
- wobei die Steuereinheit konfiguriert ist, die Empfangseinheit zu veranlassen, eine Änderung am Ablaufplan von einem Nutzer zu empfangen,
- wobei die Steuereinheit optional konfiguriert ist, die Planungseinheit zu veranlassen, den Ablaufplan zu analysieren und weitere Änderungen zu identifizieren, die sich als Folge aus der empfangenen Änderung ergeben,
- wobei die Steuereinheit konfiguriert ist, die Planungseinheit zu veranlassen, einen geänderten Ablaufplan zu erstellen, wobei der geänderte Ablaufplan die empfangene Änderung und optional die identifizierten weiteren Änderungen umfasst,
- wobei die Steuereinheit konfiguriert ist, die Planungseinheit zu veranlassen, für den geänderten Ablaufplan einen zweiten Performance-Wert zu ermitteln,
- wobei die Steuereinheit konfiguriert ist, die Planungseinheit zu veranlassen, den zweiten Performance-Wert mit dem ersten Performance-Wert zu vergleichen,
- wobei die Steuereinheit konfiguriert ist, für den Fall, dass der zweite Performance-Wert in definierter Weise von dem ersten Performance-Wert abweicht, die Planungseinheit zu veranlassen eine neuen optimierten Ablaufplan unter Berücksichtigung der Änderungen zu erstellen und/oder die Ausgabeeinheit zu veranlassen, eine Mitteilung auszugeben, wobei die Mitteilung einen oder mehrere Nutzer darüber informiert, dass der zweite Performance-Wert in definierter Weise von dem ersten Performance-Wert abweicht.

7. Computersystem gemäß einem der Ansprüche 2 bis 6,
- wobei die Steuereinheit konfiguriert ist, die Empfangseinheit zu veranlassen, von einem Nutzer eine Änderungsabsicht zu empfangen, wobei die Änderungsabsicht einen Gegenstand oder mehrere Gegenstände betrifft, wobei jeder Gegenstand ausgewählt ist aus der Reihe: Mitarbeiter, Prozessgegenstand, Aufgabe, Prozess, Betriebsmittel und/oder Hilfsmittel,
- wobei die Steuereinheit konfiguriert ist, die Planungseinheit zu veranlassen, diejenigen Änderungsmöglichkeiten im Ablaufplan zu identifizieren, die für den Gegenstand / die Gegenstände der Änderungsabsicht gegeben sind, ohne dass weitere Änderungen als Folge eintreten,
- wobei die Steuereinheit konfiguriert ist, die Ausgabeeinheit zu veranlassen, die identifizierten Änderungsmöglichkeiten auszugeben.

8. Computersystem gemäß einem der Ansprüche 2 bis 7,
- wobei die Steuereinheit konfiguriert ist, die Planungseinheit zu veranlassen, den Ablaufplan anhand der Ressourcen-Informationen und der Aufgabeninformationen für eine definierte Zeitspanne zu erstellen,
- wobei die Steuereinheit konfiguriert ist, die Ausgabeeinheit zu veranlassen, unberücksichtigte Aufgaben auszugeben, wobei die unberücksichtigten Aufgaben die in dem Ablaufplan unberücksichtigt geblieben sind,
- wobei die Steuereinheit konfiguriert ist, die Planungseinheit zu veranlassen, Teilaufgaben in unberücksichtigten Aufgaben zu identifizieren,
- wobei die Steuereinheit konfiguriert ist, die Ausgabeeinheit zu veranlassen, identifizierten Teilaufgaben auszugeben,
- wobei die Steuereinheit konfiguriert ist, die Empfangseinheit zu veranlassen, eine oder mehrere Änderungen und/oder Änderungsabsichten betreffend die Teilaufgaben zu empfangen und/oder die Planungseinheit zu veranlassen, einen neuen optimierten Ablaufplan zu erstellen, wobei zumindest ein Teil der Teilaufgaben in dem neuen optimierten Ablaufplan berücksichtigt ist.

9. Verfahren umfassend die Schritte:
- Empfangen von Aufgabeninformationen, wobei die Aufgabeninformationen zumindest eine Mehrzahl von Prozessgegenständen spezifizieren, die jeweils einem oder mehreren Prozessen zugeführt werden sollen,
- Empfangen oder Ermitteln von Prozessinformationen, wobei die Prozessinformationen die Prozesse spezifizieren, denen die Prozessgegenstände zugeführt werden sollen,
- Ermitteln von Betriebsmittelinformationen für eine Mehrzahl an Betriebsmitteln,
- Ermitteln von Mitarbeiterinformationen für eine Mehrzahl an Mitarbeitern,
- Erstellen eines Ablaufplans anhand der Aufgabeninformationen, der Prozessinformationen, der Betriebsmittelinformationen und der Mitarbeiterinformationen, wobei der Ablaufplan Angaben darüber umfasst,
• in welchen Zeitspannen die Prozesse ausgeführt werden sollen,
• von welchen Mitarbeitern die Prozesse ausgeführt werden sollen, und
• welche Betriebsmittel bei der Ausführung der Prozesse eingesetzt werden sollen,
wobei der Ablaufplan im Hinblick auf ein Optimierungsziel optimiert ist,
- Anzeigen und/oder Ausgeben und/oder Speichern zumindest eines Teils des Ablaufplans.

10. Verfahren gemäß Anspruch 9, wobei es sich bei den Prozessgegenständen um Stichproben von Rohmaterialien, von Zwischenprodukten und/oder von Produkten, insbesondere um Stichproben, die bei der Herstellung von Arzneimitteln oder Wirkstoffen verwendet werden und/oder anfallen und/oder erstehen und/oder erzeugt werden, handelt.

11. Verfahren gemäß einem der Ansprüche 9 oder 10, wobei es sich bei den Prozessen um Ermittlungen von Ist-Merkmalen der Prozessgegenstände und/oder vorbereitende Maßnahmen für solche Ermittlungen und/oder Folgemaßnahmen von solchen Ermittlungen vorzugsweise im Rahmen einer Qualitätskontrolle, insbesondere im Rahmen der Herstellung eines Arzneimittels, Pflanzenschutzmittels und/oder Wirkstoffs handelt.

12. Verfahren gemäß einem der Ansprüche 9 bis 11, ferner umfassend die Schritte:
- Empfangen der Prozessgegenstände,
- Ermitteln von eindeutigen Kennungen für die Prozessgegenstände,
- Ermitteln von Informationen zu den Prozessgegenständen aus einer oder mehreren Datenbanken anhand der eindeutigen Kennungen
- Berücksichtigen der ermittelten Informationen bei der Erstellung des Ablaufplans.

13. Computerprogrammprodukt umfassend einen Datenträger, auf dem ein Computerprogramm gespeichert ist, das in den Arbeitsspeicher eines Computersystems geladen werden kann und dort das Computersystem dazu veranlasst, folgende Schritte auszuführen:
- Empfangen von Aufgabeninformationen, wobei die Aufgabeninformationen zumindest eine Mehrzahl von Prozessgegenständen spezifizieren, die jeweils einem oder mehreren Prozessen zugeführt werden sollen,
- Empfangen oder Ermitteln von Prozessinformationen, wobei die Prozessinformationen die Prozesse spezifizieren, denen die Prozessgegenstände zugeführt werden sollen,
- Ermitteln von Betriebsmittelinformationen für eine Mehrzahl an Betriebsmitteln,
- Ermitteln von Mitarbeiterinformationen für eine Mehrzahl an Mitarbeitern,
- Erstellen eines Ablaufplans anhand der Aufgabeninformationen, der Prozessinformationen, der Betriebsmittelinformationen und der Mitarbeiterinformationen, wobei der Ablaufplan Angaben darüber umfasst,
• in welchen Zeitspannen die Prozesse ausgeführt werden sollen,
• von welchen Mitarbeitern die Prozesse ausgeführt werden sollen, und
• welche Betriebsmittel bei der Ausführung der Prozesse eingesetzt werden sollen,
wobei der Ablaufplan im Hinblick auf ein Optimierungsziel optimiert ist,
- Anzeigen und/oder Ausgeben und/oder Speichern zumindest eines Teils des Ablaufplans.

14. Computerprogrammprodukt gemäß Anspruch 13, wobei das Computerprogramm ein Computersystem gemäß einem der Ansprüche 1 bis 8 veranlasst, einen oder mehrere Schritte des Verfahrens gemäß einem der Ansprüche 10 bis 12 auszuführen.

15. Verwendung eines Computersystems gemäß einem der Ansprüche 1 bis 8 und/oder eines Computerprogrammprodukts gemäß einem der Ansprüche 13 oder 14 zum Erstellen und/oder Ändern eines Ablaufplans für die Durchführung von Qualitätskontrollen, insbesondere im Rahmen der Herstellung von Arzneimitteln, Pflanzenschutzmitteln und/oder Wirkstoffen.
